# EUROPEAN PATENT SPECIFICATION

(11) **EP 2 386 783 B1**
(45) Date of publication and mention of the grant of the patent: **29.07.2015**
(21) Application number: 11176805.7
(22) Date of filing: 18.02.2008
(51) Int. Cl.: F16H 57/04

(54) **V-belt type transmission for a motorcycle**
Keilriementypgetriebe für ein Motorrad
Transmission de type à courroie pour une moto.

(30) Priority: 19.02.2007 JP 2007038704
(43) Date of publication of application: 16.11.2011
(62) Divisional of application: 08250559.5
(73) Proprietor: Yamaha Hatsudoki Kabushiki Kaisha, Iwata-shi, Shizuoka-ken 438 (JP)
(72) Inventor: Mine, Yutaka, Shizuoka-ken, 438-8501 (JP); Kaminokado, Hiroyuki, Shizuoka-ken, 438-8501 (JP); Kawakami, Satoshi, Shizuoka-ken, 438-8501 (JP)
(74) Representative: Moreland, David

(56) References cited:
- EP-A1- 0 471 128
- JP-U- 59 027 124
- JP-U- 60 188 690
- US-A- 4 697 665

## Description

### FIELD OF THE INVENTION

The present invention relates to a vehicle comprising a transmission cover which covers a drive pulley, and an intake duct extending longitudinally.

### BACKGROUND TO THE INVENTION

Scooter type straddle-type vehicles provided with a transmission unit are known in the art.

Generally, a transmission unit comprises an intake port and an exhaust port in addition to a V-belt type transmission, which transmits a motive power from an engine to a rear wheel. Further, the transmission unit comprises a cooling fan provided outwardly of a drive pulley in a vehicle width direction and an intake duct provided in a longitudinal direction of a straddle-type vehicle. The intake duct is connected to an intake port to lead an outside air into the transmission unit to cool the V―belt type transmission whereby heat generation of the belt due to frictional heat is suppressed. Such an arrangement is disclosed in, for example, JP-A-2000-79892.

Also, an exhaust duct is provided in the transmission unit. The exhaust duct includes an exhaust port at one end thereof and a vent port at the other end thereof, and an outside air flowing to the vent port from within the transmission unit is exhausted from the exhaust port.

Further, the exhaust duct comprises a water flashing rib on an inner wall of the exhaust duct on a rear side in a longitudinal direction of a straddle-type vehicle. Thereby, the exhaust duct can splash water rising along the inner wall on the rear side. Consequently, the exhaust duct can prevent water from entering the transmission unit while ensuring a quantity of an outside air exhausted from the transmission unit.

With the scooter type straddle-type vehicle described above, however, a tandem foot rest for a passenger (referred below as rear passenger) seated on the rear portion of a tandem seat overlaps the intake duct in the vehicle width direction. Consequently, it is necessary to provide the tandem foot rest outwardly of the intake duct, creating a problem that a vehicle width is enlarged, thus reducing ride comfort for the rear passenger, or making it difficult for the rear passenger to mount and dismount the vehicle.

This problem may be addressed by decreasing a diameter of the intake duct in order to restrict a vehicle width. However, this will result in a decrease in flow rate into the transmission unit, so that there is caused a problem that it is not possible to ensure the cooling quality for the V-belt type transmission.

Also, with the scooter type straddle-type vehicle described above, when water is directed at the vehicle (for example, water splashed by a rear wheel in travel, and water discharged from a hose during washing) and enters the exhaust duct from the exhaust port, such water strikes against the inner wall of the exhaust duct to be splashed and thus reaching a V-belt chamber from the vent port, so that it cannot be prevented by the water flashing rib.

An example of a vehicle having an intake duct arrangement is given in EP0471128, which describes an air intake system for a utility vehicle that drives the wheels of the vehicle via a belt type transmission. The vehicle comprises a hollow, open ended and generally rectangular frame, wherein one of the lower ends of the frame is connected to an air intake port for cooling the transmission. An air intake is provided in an upper part of the frame. The transmission comprises a case and a cover secured to the edge of the case so as to enclose pulley mechanisms and an endless belt. A variable pulley on the input side of the pulley mechanism is positioned to the outside of the belt and a cooling fan is mounted at the centre of the outer end surface of the variable pulley. An air intake port is formed to the outside of the cooling fan. A flexible connection duct is provided such that the duct covers the air intake port and forms the air intake of the transmission. The other end of the flexible duct is connected to one of the bottom ends of the hollow frame.

The invention has been thought of in view of the problem and has its object to provide a straddle-type vehicle provided with a V-belt type transmission, in which it is possible to ensure the cooling quality for the V-belt type transmission while restricting a vehicle width.

Further, selected embodiments of the invention have the object to provide a straddle-type vehicle including a transmission unit provided with a V-belt type transmission and enabling reducing water splashed and entering into the transmission unit from an exhaust port while ensuring the exhaust efficiency for the transmission unit.

### SUMMARY OF THE INVENTION

Various aspects of the present invention are defined in the independent claims. Some preferred features are defined in the dependent claims.

Described herein by way of information is a vehicle comprising:
a transmission drive pulley;
a cooling fan positioned outwardly of the drive pulley in a vehicle width direction;
a transmission cover adapted to cover the drive pulley and cooling fan, wherein the transmission cover includes an intake port provided outwardly of the cooling fan in the vehicle width direction, and an exhaust port through which air sucked from the intake port is exhausted; and
an intake duct provided in a longitudinal direction of the vehicle and comprising a first intake duct portion, through which air is sucked, and a second intake duct portion connected to the intake port,
wherein the second intake duct portion comprises a portion bent inward in the vehicle width direction to be connected to the first duct portion,
and wherein an outer side of the first intake duct portion is provided inwardly of an outer side of the cooling fan in the vehicle width direction.

The first intake duct portion may include a duct intake port at a front end thereof in the longitudinal direction of the vehicle. The vehicle further comprises an engine having a combustion chamber and adapted to drive the drive pulley. The duct intake port may be provided forwardly of a front end of the combustion chamber in the longitudinal direction of the vehicle.

The intake duct may comprise a bent portion, and an inner wall of the bent portion may be substantially perpendicular to a direction of air which flows in the intake duct to be directed toward the bent portion.

The vehicle further comprises a driven pulley coupled to the drive pulley and a rear wheel rotated by the driven pulley. The exhaust port and the duct intake port may be provided above a center of the rear wheel.

The vehicle may further comprise an exhaust duct. The exhaust duct may comprise:
the exhaust port at one end thereof;
a vent port disposed at the other end thereof above the exhaust port; and
a first water flashing rib, a second water flashing rib, a first water proof rib, and a second water proof rib, which ribs project on an inner wall of the exhaust duct, the first water flashing rib being provided on the inner wall opposed to the second water flashing rib, and the first water proof rib being provided below the second water proof rib.

In a cross section of the exhaust duct from a side passing through the first water flashing rib and the second water flashing rib along a side of the transmission cover in a vehicle width direction: \
one end of the first water proof rib intersects a first reference line connecting between a tip end of the first water flashing rib toward a center of the exhaust duct and one end of the exhaust port in a longitudinal direction of the vehicle;
one end of the second water proof rib intersects a second reference line connecting between a tip end of the second water flashing rib toward the center of the exhaust duct and the other end of the exhaust port in the longitudinal direction-of the vehicle;
the other end of the second water proof rib intersects a third reference line connecting between the tip end of the first water flashing rib toward the center of the exhaust duct and the other end of the first water proof rib; and
the first reference line and the second reference line do not intersect each other.

Described herein by way of information is a vehicle comprising a transmission cover adapted to cover at least a portion of a transmission assembly and an exhaust duct, wherein the transmission cover comprises an intake port, through which air is sucked, and an exhaust port, through which said air is exhausted, wherein the exhaust duct comprises:
the exhaust port at one end thereof;
a vent port disposed at the other end thereof above the exhaust port;
a first water flashing rib, a second water flashing rib, a first water proof rib, and a second water proof rib, which ribs project on an inner wall of the exhaust duct, the first water flashing rib being provided on the inner wall opposed to the second water flashing rib, and the first water proof rib being provided below the second water proof rib,
wherein, in a cross section of the exhaust duct from a side passing through the first water flashing rib and the second water flashing rib along a side of the transmission cover in a vehicle width direction:
   one end of the first water proof rib intersects a first reference line connecting between a tip end of the first water flashing rib toward a center of the exhaust duct and one end of the exhaust port in a longitudinal direction of the vehicle;
   one end of the second water proof rib intersects a second reference line connecting between a tip end of the second water flashing rib toward the center of the exhaust duct and the other end of the exhaust port in the longitudinal direction of the vehicle;
   the other end of the second water proof rib intersects a third reference line connecting between the tip end of the first water flashing rib toward the center of the exhaust duct and the other end of the first water proof rib; and
   the first reference line and the second reference line do not intersect each other.

The exhaust duct passing through the first water proof rib and the second water proof rib may be equal to or larger in cross sectional area than the exhaust port.

The vehicle is preferably provided in the form of a straddle-type vehicle.

Described herein by way of information is a straddle-type vehicle that comprises a transmission cover, which covers a drive pulley, a driven pulley, a belt, and a cooling fan, and an intake duct provided in a longitudinal direction of the vehicle, and wherein the cooling fan is provided outwardly of the drive pulley in a vehicle width direction, the transmission cover includes an intake port provided outwardly of the cooling fan in the vehicle width direction and an exhaust port, through which an outside air sucked from the intake port is exhausted, the intake duct comprises a first intake duct portion, through which the outside air is sucked, and a second intake duct portion connected to the intake port, the second intake duct portion is bent inward in the vehicle width direction to be connected to the first duct portion, and an outer end of the first intake duct portion in the vehicle width direction is provided inwardly of that end of the cooling fan, which is outward in the vehicle width direction, in the vehicle width direction.

With such straddle-type vehicle, an outer end of the first intake duct portion provided on the intake duct is provided inwardly of an outer end of the cooling fan in the vehicle width direction.

Since such arrangement of the intake duct makes it possible to arrange a tandem foot rest of a rear passenger inward in the vehicle width direction, it is possible to improve a foot putting quality for the rear passenger. Also, since there is no need of decreasing a diameter of the intake duct in order to make a vehicle width small, it is possible to ensure a sufficient intake quantity of an outside air. Consequently, it is possible to ensure the cooling quality for the V-belt type transmission. Also, since an outside air passing inward in the vehicle width direction contains less dust, it is possible to suppress clogging of air cleaner elements mounted in the intake port due to dust. Consequently, it is possible to ensure the cooling quality for the V-belt type transmission.

That is, with such straddle-type vehicle, while restricting a vehicle width in case of the provision of a V-belt type transmission, it is possible to ensure the cooling quality for the V-belt type transmission.

The vehicle may further comprise an engine, which drives the drive pulley, and that the engine comprises a combustion chamber, in which a fuel burns, forwardly of the transmission cover in a longitudinal direction of the straddle-type vehicle, the first intake duct portion includes a duct intake port at a front end of the first intake duct portion in the longitudinal direction of the straddle-type vehicle, and the duct intake port is provided forwardly of a front end of the combustion chamber in the longitudinal direction of the straddle-type vehicle.

The intake duct may comprise a bent portion, and an inner wall of the bent portion is substantially perpendicular to a direction of an outside air, which flows in the intake duct to be directed toward the bent portion.

The vehicle may comprise a rear wheel rotated by the driven pulley, and wherein the exhaust port and that the duct intake port are provided above a center of the rear wheel as viewed in side view of the straddle-type vehicle.

Described herein by way of information is a straddle-type vehicle comprising a transmission cover, which covers a drive pulley, a driven pulley, a belt, and an exhaust duct, and wherein the transmission cover comprises an intake port, through which an outside air is sucked, and an exhaust port, through which the outside air sucked is exhausted, the exhaust duct comprises the exhaust port at one end thereof, a vent port disposed at the other end thereof above the exhaust port, a first water flashing rib, a second water flashing rib, a first water proof rib, and a second water proof rib, which ribs project on an inner wall of the exhaust duct, the first water flashing rib is provided on the inner wall opposed to the second water flashing rib, the first water proof rib is provided below the second water proof rib, in a cross section of the exhaust duct from a side passing through the first water flashing rib and the second water flashing rib along a side of the transmission cover in a vehicle width direction, one end of the first water proof rib intersects a first reference line connecting between a tip end of the first water flashing rib toward a center of the exhaust duct and one end of the exhaust port in a longitudinal direction of the straddle-type vehicle, one end of the second water proof rib intersects a second reference line connecting between a tip end of the second water flashing rib toward the center of the exhaust duct and the other end of the exhaust port in the longitudinal direction of the straddle-type vehicle, the other end of the second water proof rib intersects a third reference line connecting between the tip end of the first water flashing rib toward the center of the exhaust duct and the other end of the first water proof rib, and the first reference line and the second reference line do not intersect each other. Further, the exhaust duct passing through the first water proof rib and the second water proof rib is preferably equal to or larger in cross sectional area than the exhaust port.

According to such arrangement of the exhaust duct, water rising along the inner wall of the exhaust duct from the exhaust port can be lowered by the first water flashing rib and the second water flashing rib, and water splashed and invading the exhaust duct from the exhaust port can be cut off by the first water proof rib and the second water proof rib. Also, according to such arrangement of the exhaust duct, since it is possible to ensure the exhaust efficiency for an outside air, an outside air does not remain in the transmission cover and it is possible to efficiently cool the V-belt type transmission.

That is, with such straddle-type vehicle, in case of the provision of a transmission unit provided with a V-belt type transmission, it is possible to reduce water splashed and invading the transmission unit from the exhaust port while ensuring the exhaust efficiency in the transmission unit.

According to at least one of the vehicles described above, it is possible to provide a vehicle, in which restricting a vehicle width in case of the provision of a V-belt type transmission, it is possible to ensure the cooling quality of the V-belt type transmission.

According to at least one of the vehicles described above, it is possible to provide a vehicle, in which in case of the provision of a transmission unit provided with a V-belt type transmission, it is possible to reduce water splashed and invading the transmission unit from the exhaust port while ensuring the exhaust efficiency in the transmission unit.

### BRIEF DESCRIPTION OF THE DRAWINGS

These and other aspects of the present invention will now be described, by way of example only, with reference to the accompanying drawings, in which:
Fig. 1 is a left side view showing a motorcycle 10, being a straddle-type vehicle according to an embodiment of the invention;
Fig. 2 is a plan, cross sectional view showing the vicinity of a transmission unit of the motorcycle of Fig. 1;
Fig. 3 is a side, cross sectional further view showing the transmission unit according to the embodiment of the invention;
Fig. 4 is a view showing, from the front, a first intake duct portion and an engine according to the embodiment of the invention; and
Fig. 5 is a side, cross sectional view showing an exhaust duct according to the embodiment of the invention.

### DETAILED DESCRIPTION OF THE DRAWINGS

An embodiment of a straddle-type vehicle according to the invention will be described with reference to the drawings. The same or similar parts in the following figures are denoted by the same or similar reference numerals. However, it should be kept in mind that the drawings are schematic and ratios of respective dimensions may be different from reality.

Accordingly, specific dimensions, etc. should be determined taking the following descriptions into consideration. Also, there are of course included parts, of which dimensional relationships and ratios are different from one another among the figures.

In addition, terms are defined as follows in the specification of the present application. Terms "leftward in a vehicle width direction" and "rightward in a vehicle width direction" mean leftward rightward as directed toward the front from the rear of a motorcycle 10. Terms "inward in a vehicle width direction" and "outward in a vehicle width direction" mean central side · endwise side of the motorcycle 10. Terms "forward", "rearward", "upward", and "downward" mean forward rearward · upward · downward of the motorcycle 10.

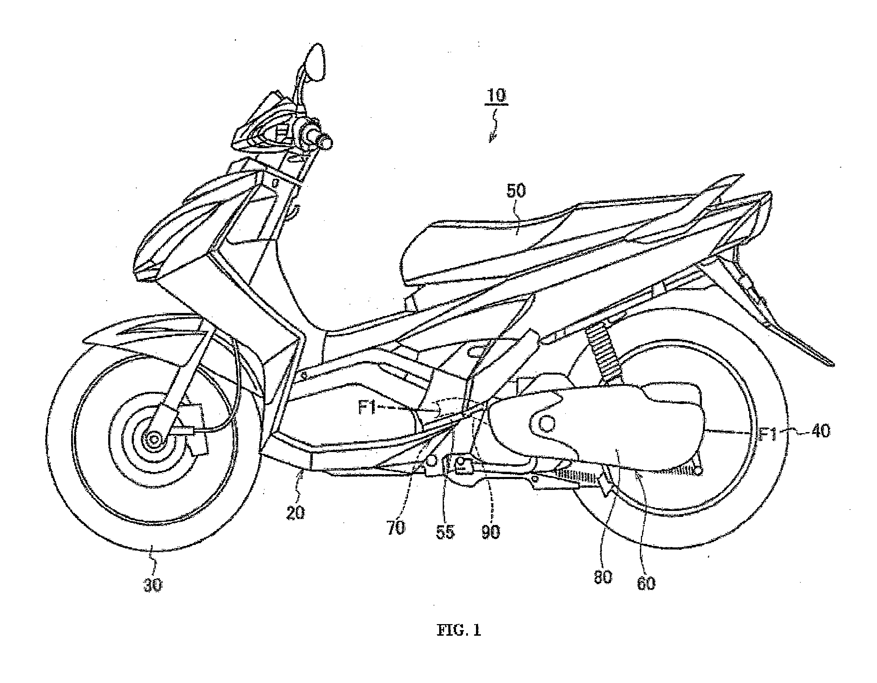

Fig. 1 is a left side view showing the outline construction of the motorcycle 10 being a straddle-type vehicle according to the embodiment. As shown in the figure, the motorcycle 10 includes a vehicle body 20 formed from a body frame (not shown) of underbone type. Mounted on the vehicle body 20 are a front wheel 30, a rear wheel 40, a tandem seat 50, a tandem foot rest 55, a transmission unit 60, an engine 70, a transmission cover 80, an intake duct 90, etc.

The rear wheel 40 is supported by a shaft at a rear end of the transmission cover 80.

The tandem seat 50 is arranged above the transmission unit 60. The tandem seat 50 is a saddle-type double ride seat.

it is intended that a rear passenger rests their feet on the tandem foot rest 55. The tandem foot rest 55 is arranged outwardly of the intake duct 90 in a vehicle width direction. That is, the tandem foot rest 55 and the intake duct 90 overlap each other in the vehicle width direction.

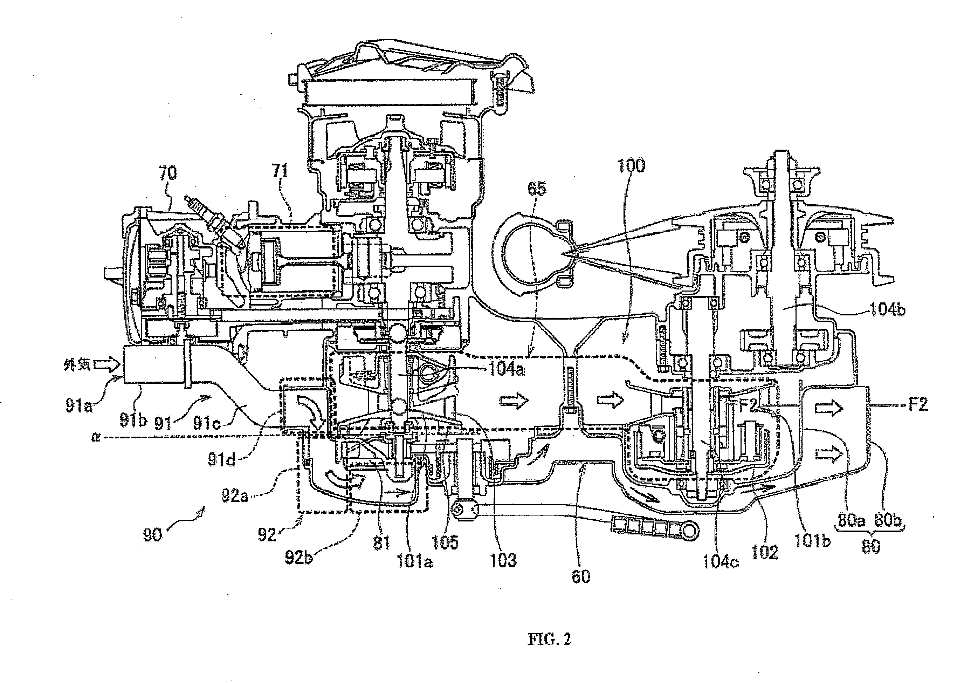

The transmission unit 60 comprises a V-belt type transmission 65, as shown in Fig. 2. Motive power generated by the engine 70 is transmitted to the rear wheel 40 by the V-belt type transmission 65.

The transmission cover 80 covers the transmission unit 60. Specifically, the transmission cover 80 is composed of an inner cover 80a and an outer cover 80b. The inner cover 80a covers the V-belt type transmission 65, etc. The outer cover 80b covers an outside of the inner cover 80a with a sound insulating urethane material therebetween. The inner cover 80a is formed from a metal such as aluminum alloy, etc. The outer cover 80b is formed from a resin material, etc.

The intake duct 90 is a member, by which an outside air for cooling of a V-belt chamber 100 is led into the transmission cover 80. As shown in Fig. 1, the intake duct 90 extends forward along the vehicle body 20 from obliquely upwardly of a front end of the transmission cover 80.

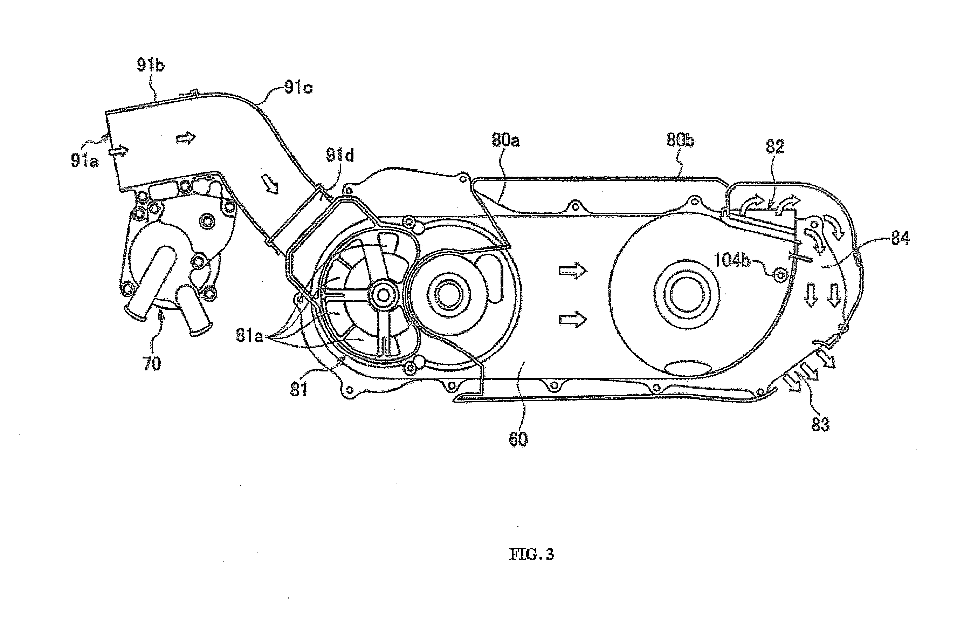

The construction of the transmission unit 60 will be described with reference to Figs. 2 and 3. Fig. 2 is a plan, cross sectional view showing the vicinity of the transmission unit 60 and taken along the line F1-F1 in Fig. 1. Fig. 3 is a side, cross sectional view along a side of the transmission cover 80 of the transmission unit 60. In addition, arrows in the figures indicate flow of an air.

The transmission unit 60 is formed by covering the V-belt type transmission 65, a cooling fan 105, an intake port 81, a vent port 82, an exhaust port 83, and an exhaust duct 84 with the transmission cover 80.

The V-belt type transmission 65 comprises a drive pulley 101a, a driven pulley 101b, a centrifugal clutch 102, and a V-belt 103.

The drive pulley 101a is mounted to a left end of a crank shaft 104a in the vehicle width direction in a manner to afford variation in an opposed spacing. The driven pulley 101b is supported rotatably on an intermediate shaft 104c connected to a rear-wheel shaft 104b through a gear. The centrifugal clutch 102 connects between the driven pulley 101b and the intermediate shaft 104c to transmit rotation of the driven pulley 101b to the rear-wheel shaft 104b. The V-belt 103 is stretched between the drive pulley 101a and the driven pulley 101b.

The cooling fan 105 is disposed laterally of and leftwardly of the drive pulley 101a in the vehicle width direction to be formed integral with the drive pulley 101a. The cooling fan 105 rotates whereby an outside air is led into the transmission unit 60.

The intake port 81 is formed on the inner cover 80a leftwardly of the cooling fan 105 in the vehicle width direction. The intake port 81 comprises a plurality of intake holes (not shown). Air cleaner elements 81a are mounted in the respective intake holes. The air cleaner elements 81a thus mounted prevent dust in the outside air from invading or entering the transmission unit 60. That is, the function of an air cleaner is incorporated into the intake port 81.

The vent port 82 is formed on an upper portion of a rear end of the inner cover 80a. An outside air having cooled the V-belt type transmission 65 is discharged into the exhaust duct 84 from the vent port 82.

The exhaust port 83 is formed on a lower portion of a rear end of the outer cover 80b. An outside air discharged from the vent port 82 is discharged from the exhaust port 83 through the exhaust duct 84.

Accordingly, the exhaust duct 84 comprises the exhaust port 83 and the vent port 82 disposed at the other end above the exhaust port 83. The structure of the exhaust duct 84 will be described below in detail.

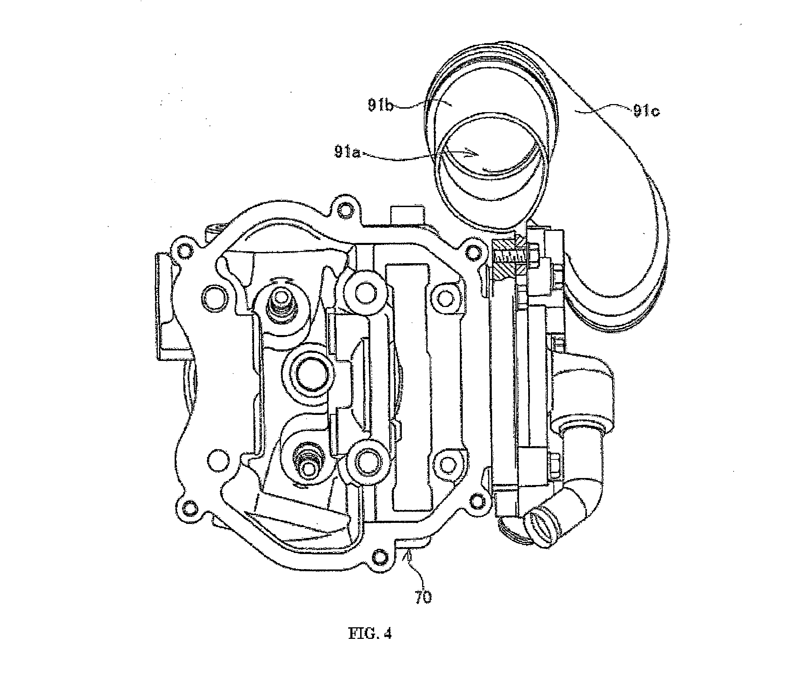

The structure of the intake duct 90 being a portion, which constitutes a feature of the invention, will be described in detail with reference to Figs. 2 to 4. As shown in Fig. 2, the intake duct 90 comprises a first intake duct portion 91 and a second intake duct portion 92. Fig. 4 shows an arrangement of the first intake duct portion 91 and the engine 70 as viewed from the front.

A portion of the second intake duct portion 92 bends or extends inwardly in the vehicle width direction to be connected to the first intake duct portion 91.

As shown in Fig. 2, the first intake duct portion 91 comprises a resin duct 91b, a rubber duct 91c, and a first bent portion 91d, which are successively connected in this order. A duct intake port 91a is formed at a front end of the resin duct 91b to permit an outside air to be taken from the duct intake port 91a.

The resin duct 91b is arranged leftwardly of the engine 70 in the vehicle width direction. As shown in Figs. 3 and 4, a lower end of the resin duct 91b is screwed to a left, upper end of the engine 70 in the vehicle width direction. Also, as shown in Fig. 2, the front end of the resin duct 91b is arranged forwardly of a front end of a combustion chamber 71 in the engine 70. Air taken or drawn in through the duct intake port 91a flows in the rubber duct 91c connected to a rear portion of the resin duct 91b to be directed toward the first bent portion 91d. That is, air flows rearward in the first intake duct portion 91.

The first bent portion 91d is arranged obliquely upwardly of the front end of the transmission unit 60. That is, the first bent portion 91d is arranged forwardly and obliquely upwardly of the drive pulley 101a with the inner cover 80a therebetween. Also, the first bent portion 91d is connected to the rubber duct 91c. An inner wall of the first bent portion 91d is substantially perpendicular to a direction (that is, rearward) of an outside air, which flows in the rubber duct 91c to be directed toward the first bent portion 91d. Accordingly, air flowing in the rubber duct 91c is bent, directed or deflected leftward along the inner wall of the first bent portion 91d in the vehicle width direction. The air bent leftward in the vehicle width direction is directed toward the second intake duct portion 92.

A left end of the first intake duct portion 91, which has such structure, in the vehicle width direction is provided rightwardly, in the vehicle width direction of that end of the cooling fan 105, which is leftward in the vehicle width direction. Specifically, as shown in Fig. 2, a left end of the first bent portion 91d of the first intake duct portion 91 is provided rightwardly of a left end (α line in the figure) of the cooling fan 105 in the vehicle width direction. That is, a boundary between the first intake duct portion 91 and the second intake duct portion 92 is inwardly of the α line in the vehicle width direction.

The second intake duct portion 92 comprises a second bent portion 92a and an intake-port connected portion 92b.

The second bent portion 92a is contiguous to and \ leftwardly of the first bent portion 91d in the vehicle width direction. Accordingly, air flowing leftward flows into the second bent portion 92a from the first bent portion 91d. An inner wall of the second bent portion 92a is substantially perpendicular to a direction (that is, leftward) of drawn air, which flows into the second bent portion 92a. Accordingly, air flowing into the second bent portion 92a is bent, directed or deflected rearward along the inner wall of the second bent portion 92a. Air is therefore directed toward the intake-port connected portion 92b.

The intake-port connected portion 92b is arranged leftwardly of the intake port 81, which is provided on the transmission unit 60 (the inner cover 80a thereof), in the vehicle width direction. That is, air flowing into the intake-port connected portion 92b is discharged into the transmission unit 60 through the intake port 81. In addition, air flowing into the intake-port connected portion 92b is also discharged between the inner cover 80a and the outer cover 80b, which will be described later.

The intake duct 90 according to the embodiment comprises the first intake duct portion 91, through which air is sucked, and the second intake duct portion 92 connected to the intake port 81 and bent inward in the vehicle width direction to be connected to the first intake duct portion 91, and an outer end of the first intake duct portion 91 is provided inwardly of an outer end of the cooling fan 105 in the vehicle width direction.

Accordingly, the tandem foot rest 55 for a rear passenger can be arranged inward in the vehicle width direction, so that it is possible to improve ride comfort for the rear passenger.

Also, since there is no need of decreasing a diameter of the intake duct 90 in order to make a vehicle width small, it is possible to ensure a sufficient intake quantity of air. Consequently, it is possible to ensure a sufficient cooling quality of the V-belt type transmission 65.

Also, since air passing inward in the vehicle width direction contains less dust, it is possible to suppress clogging of the air cleaner elements 81a mounted in the intake port 81 due to dust. Consequently, it is possible to improve the cooling quality of the V-belt type transmission 65.

The first intake duct portion 91 provided on the intake duct 90 according to the embodiment comprises the duct intake port 91a at the front end of the first intake duct portion 91 in a longitudinal direction of the motorcycle 10, the duct intake port 91a being provided forwardly of the front end of the combustion chamber 71 in the engine 70 in the longitudinal direction of the motorcycle 10.

Accordingly, the intake duct 90 can take in air not heated by heat generated from the engine 70 in the vicinity of the combustion chamber 71. Consequently, it is possible to improve the cooling quality of the V-belt type transmission 65.

The intake duct 90 according to the embodiment comprises bent portions (91d, 92a) and inner walls of the bent portions are substantially perpendicular to a direction of air, which flows in the intake duct 90 to be directed toward the bent portions.

Accordingly, since air is bent, directed or deflected along the inner walls of the bent portions, water content and dust in the outside air are caused to adhere to the inner walls of the bent portions and thus it is possible to take in air containing less water content and dust. Also, while inflowing air is decreased in flow velocity, it is possible to ensure a sufficient flow rate of air.

As described above, with such a motorcycle 10, while restricting a vehicle width in case of the provision of the V-belt type transmission 65, it is possible to ensure the cooling quality of the V-belt type transmission 65.

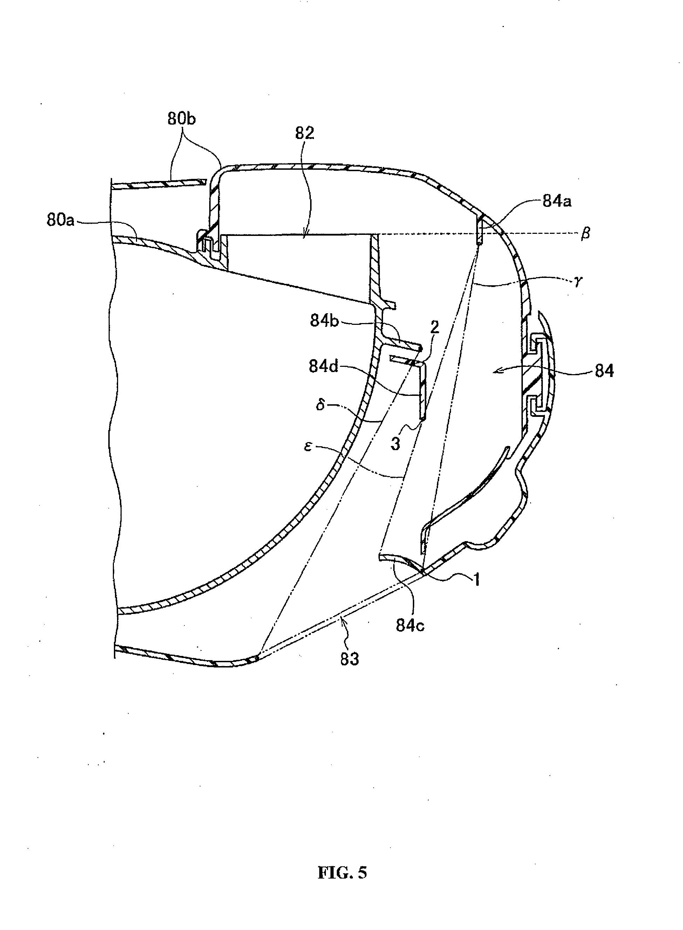

The structure of the exhaust duct 84 being a portion, which constitutes a feature of the invention, will be described in detail with reference to Fig. 5. Fig. 5 is a side, cross sectional view taken along the line F2-F2 in Fig. 2. That is, Fig. 5 is a side, cross sectional view passing a first water flashing rib and a second water flashing rib of the exhaust duct 84 along a side of the transmission cover 80 in the vehicle width direction.

The exhaust duct 84 comprises a conduit extending between the vent port 82 formed on the upper portion of the rear end of the inner cover 80a and the exhaust port 83 formed on the lower portion of the rear end of the outer cover 80b. A front, inner wall of the exhaust duct 84 in a longitudinal direction of the vehicle body is formed from the inner cover 80a and a rear, inner wall thereof is formed from the outer cover 80b.

Air having cooled the transmission unit 60 is discharged into the exhaust duct 84 from the vent port 82. The air is then exhausted through the exhaust duct 84 from the exhaust port 83.

The exhaust duct 84 comprises a first water flashing rib 84a, a second water flashing rib 84b, a first water proof rib 84c, and a second water proof rib 84d. The first water flashing rib 84a, the second water flashing rib 84b, and the first water proof rib 84c project toward a center of the exhaust duct 84 from the inner wall of the exhaust duct 84. Also, the second water proof rib 84d is provided in a hollow portion of the exhaust duct 84.

Here, "water flashing rib" referred to in the specification of the present application means a rib, which suppresses water rising along the inner wall of the exhaust duct 84 from the exhaust port 83 to prevent water from invading the transmission unit 60. Also, "water proof rib" referred to in the specification of the present application means a rib, which cuts off water entering straight into the exhaust duct 84 from the exhaust port 83 to prevent water from invading the transmission unit 60.

The first water flashing rib 84a extends downward from a predetermined position on a rear, inner wall (that is, the outer cover 80b). A tip end of the first water flashing rib 84a toward the center of the exhaust duct 84 is arranged below the vent port 82. Specifically, as shown in Fig. 5, the first water flashing rib 84a extends downwardly of P line, which indicates an upper end position of the vent port 82, from above the outer cover 80b. Accordingly, water rising from an inner wall of the outer cover 80b is suppressed below the vent port 82, so that it does not invade the transmission unit 60 from the vent port 82.

The second water flashing rib 84b extends toward the center of the exhaust duct 84 from a predetermined position on a front, inner wall (that is, the inner cover 80a) . That is, the second water flashing rib 84b is provided on the inner wall opposed to the first water flashing rib 84a. Accordingly, water rising along the inner wall defined by the inner cover 80a is suppressed below the vent port 82, so that it does not invade the transmission unit 60 from the vent port 82.

Lengths of the first water flashing rib 84a and the second water flashing rib 84b can be set to that extent, by which the rising water can be suppressed, and to such a limit, up to which the exhaust duct 84 is not significantly decreased in exhaust efficiency.

Also, the first water proof rib 84c extends toward the center of the exhaust duct 84 from a rear end of the exhaust port 83. The first water proof rib 84c according to the embodiment is in contact with the rear end of the exhaust port 83 but may be separated therefrom.

The second water proof rib 84d is arranged separately from the inner wall of the exhaust duct 84, the first water flashing rib 84a, the second water flashing rib 84b, and the first water proof rib 84c in the hollow portion of the exhaust duct 84.

The first water proof rib 84c and the second water proof rib 84d are arranged in appropriate positions to enable cutting off water entering straight into the exhaust duct 84 from the exhaust port 83, or leading the water to the first water flashing rib 84a or the second water flashing rib 84b.

It is required that the respective ribs be arranged in appropriate positions to cooperate together to enable cutting off water invading from the exhaust port 83. Those appropriate positions, in which the respective ribs are arranged, will be described below with reference to Fig. 5. In addition, "toward a center" and "toward an inner wall", respectively, in the descriptions are related to the exhaust duct 84.

The first water flashing rib 84a is provided on an inner wall (a rear, inner wall in Fig. 5) opposed to the second water flashing rib 84b.

The first water proof rib 84c is provided below the second water proof rib 84d.

One end of the first water proof rib 84c toward an inner wall intersects a first reference line γ connecting between a tip end of the first water flashing rib 84a toward a center and one rear end of the exhaust port 83 (intersection point 1) .

One end of the second water proof rib 84d toward an inner wall intersects a second reference line δ connecting between a tip end of the second water flashing rib 84b toward a center and the other front end of the exhaust port 83 (intersection point 2).

The other end of the second water proof rib 84d toward a center intersects a third reference line ε connecting between the tip end of the first water flashing rib 84a toward a center and the other end of the first water proof rib 84c toward a center (intersection point 3).

Here, the first reference line γ and the second reference line δ do not intersect each other. That is, the first water flashing rib 84a and the first water proof rib 84c are paired and provided on one inner wall of the exhaust duct 84, and the second water flashing rib 84b and the second water proof rib 84d are paired and provided on the other inner wall of the exhaust duct 84.

Also, with the exhaust duct 84 according to the embodiment, a clearance defined by the first water proof rib 84c and the second water proof rib 84d is equal to or larger in cross sectional area than the exhaust port 83. That is, gases, which can pass through the clearance per unit time, is larger in volume than gases, which can pass through the exhaust port 83 per unit time.

While the structure, in which the first water proof rib 84c and the second water proof rib 84d are separate from each other, has been described, the first water proof rib 84c and the second water proof rib 84d may be made integral. In this case, an arrangement is made such that a clearance between the integral water proof rib and the inner wall of the exhaust duct 84 be equal to or larger in cross sectional area than the exhaust port 83.

With the exhaust duct 84 according to the embodiment, the first water flashing rib 84a, the second water flashing rib 84b, the first water proof rib 84c, and the second water proof rib 84d are arranged in appropriate positions. Also, with the exhaust duct 84 according to the embodiment; the clearance defined by the first water proof rib 84c and the second water proof rib 84d is larger in cross sectional area than the exhaust port 83.

Accordingly, it is possible to effectively cut off water invading from the exhaust port 83. Specifically, the first water flashing rib 84a and the second water flashing rib 84b can suppress water rising along the inner wall of the exhaust duct 84 from the exhaust port 83, and the first water proof rib 84c and the second water proof rib 84d can cut off water splashed and invading the exhaust duct 84 from the exhaust port 83.

Also, since the clearance defined by the first water proof rib 84c and the second water proof rib 84d is larger in cross sectional area than the exhaust port 83, it is possible to ensure sufficient exhaust efficiency of the air. Consequently, air does not remain in the transmission unit 60 but it is possible to efficiently cool the V-belt type transmission 65.

As described above, with the motorcycle 10, in case of the provision of a transmission unit provided with the V-belt type transmission 65, it is possible to reduce water splashed and invading the transmission unit from an exhaust port while ensuring the exhaust efficiency for the transmission unit.

Air-cooling between the inner cover 80a and the outer cover 80b will now be described with reference to Figs. 1 and 2. According to the embodiment, in order to isolate a driving sound generated from the V-belt type transmission 65, the transmission cover 80 is structured such that an urethane material for sound isolation is interposed between the inner cover 80a and the outer cover 80b. Since such transmission cover 80 is low in heat dissipation, it is necessary to cool an interior of the transmission cover 80 in order to ensure a cooling efficiency in the transmission unit 60.

Hereupon, there is adopted a construction, in which the intake-port connected portion 92b provided on the second intake duct portion 92 also connects between the inner cover 80a and the outer cover 80b. That is, the intake-port connected portion 92b permits air to be exhausted also into the transmission cover 80. As shown in Fig. 2, air having cooled the interior of the transmission cover 80 is exhausted from the exhaust port 83.

The intake duct 90 according to the embodiment permits air to flow between the inner cover 80a and the outer cover 80b. By causing air to flow in the transmission cover 80, it is possible to avoid a decrease in heat dissipation of the transmission cover 80. Consequently, it is possible to ensure a cooling efficiency in the transmission unit 60.

As described above, while the contents of the invention have been disclosed by way of an embodiment of the invention, it should be understood that the invention is not limited by the descriptions and the drawings, which constitute a part of the disclosure. The disclosure will make various alternate embodiments apparent to those skilled in the art.

For example, it does not matter if the function as an air cleaner is not incorporated into the intake port 81.

Also, while the construction, in which the V-belt type transmission 65 is provided on the left of the motorcycle 10, has been described, the construction can be likewise embodied even on the right by changing one of the left and right for the other thereof.

In this manner, of course, the invention includes various embodiments not described herein. Accordingly, the invention is determined only by the appended claims.

### Description of Reference Numerals and Signs

α: left end position of cooling fan, (β: upper end position of vent port 82, γ: first reference line, δ: second reference line, ε: third reference line, 1: intersection point, 2: intersection point, 3: intersection point, 10: motorcycle, 20 : vehicle body, 30: front wheel, 40: rear wheel, 50: tandem seat, 55: tandem foot rest, 60: transmission unit, 65: V-belt type transmission, 70: engine, 71: combustion chamber, 80: transmission cover, 80a: inner cover, 80b: outer cover, 81: intake port, 81a: air cleaner element, 82: vent port, 83: exhaust port, 84: exhaust duct, 84a: first water flashing rib, 84b: second water flashing rib, 84c: first water proof rib, 84d: second water proof rib, 90: intake duct, 91: first intake duct portion, 91a: duct intake port, 91b: resin duct, 91c: rubber duct, 91d: first bent portion, 92: second intake duct portion, 92a: second bent portion, 92b: intake-port connected portion, 100: V-belt chamber, 101a: drive pulley, 101b: driven pulley, 102: centrifugal clutch, 103: V-belt, 104a: crank shaft, 104b: rear-wheel shaft, 104c: intermediate shaft, 105: cooling fan

## Claims

1. A vehicle (10) comprising:
a transmission drive pulley (101a);
an engine (70) having a combustion chamber (71), the engine (70) being adapted to drive the transmission drive pulley (101a);
a driven pulley (101b) coupled to the drive pulley (101a);
a rear wheel (40) rotated by the driven pulley (101b);
a cooling fan (105) provided on the drive pulley (101a) and positioned outwardly of the drive pulley (101a) in a vehicle width direction;
a transmission cover (80) adapted to cover the drive pulley (101a) and cooling fan (105), wherein the transmission cover (80) includes an intake port (81) provided outwardly of the cooling fan (105) in the vehicle width direction, and an exhaust port (83) through which air sucked from the intake port (81) is exhausted; and **characterized by**
an intake duct (90) provided in a longitudinal direction of the vehicle (10) and comprising a first intake duct portion (91), through which air is sucked, and a second intake duct portion (92) connected to the intake port (81), wherein
the second intake duct portion (92) comprises a portion bent inward in the vehicle width direction to be connected to the first duct portion (91), and
an outer side of the first intake duct portion (91) in the vehicle width direction is provided inwardly of an outer side of the cooling fan (105) in the vehicle width direction.

2. The vehicle (10) according to claim 1, wherein the first intake duct portion (91) includes a duct intake port (91a) at a front end thereof in the longitudinal direction of the vehicle (10), and wherein the duct intake port (91a) is provided forwardly of a front end of the combustion chamber (71) in the longitudinal direction of the vehicle (10).

3. The vehicle (10) according to claim 1 or 2, wherein the intake duct (90) comprises a bent portion (91d, 92a), and an inner wall of the bent portion (91d, 92a) is substantially perpendicular to a direction of air which flows in the intake duct (90) to be directed toward the bent portion (91d, 92a).

4. The vehicle (10) according to any preceding claim, wherein the exhaust port (83) and the duct intake port (91a) are provided above a center of the rear wheel (40).

5. The vehicle (10) according to any preceding claim, further comprising an exhaust duct (84) comprising:
the exhaust port (83) at one end thereof;
a vent port (82) disposed at the other end thereof above the exhaust port (83);
a first water flashing rib (84a), a second water flashing rib (84b), a first water proof rib (84c), and a second water proof rib (84d), which ribs project on an inner wall of the exhaust duct (84), the first water flashing rib (84a) being provided on the inner wall opposed to the second water flashing rib (84b), and the first water proof rib (84c) being provided below the second water proof rib (84d),
wherein, in a cross section of the exhaust duct (84) from a side passing through the first water flashing rib (84a) and the second water flashing rib (84b) along a side of the transmission cover (80) in a vehicle width direction:
one end of the first water proof rib (84c) intersects a first reference line (γ) connecting between a tip end of the first water flashing rib (84a) toward a center of the exhaust duct (84) and one end of the exhaust port (83) in a longitudinal direction of the vehicle (10);
one end of the second water proof rib (84d) intersects a second reference line (δ) connecting between a tip end of the second water flashing rib (84b) toward the center of the exhaust duct (84) and the other end of the exhaust port (83) in the longitudinal direction of the vehicle (10);
the other end of the second water proof rib (84d) intersects a third reference line (ε) connecting between the tip end of the first water flashing rib (84a) toward the center of the exhaust duct (84) and the other end of the first water proof rib (84c); and
the first reference line (γ) and the second reference line (δ) do not intersect each other.

## Patentansprüche

1. Fahrzeug (10), das Folgendes umfasst:
eine Getriebe-Antriebsscheibe (101a),
einen Motor (70), der eine Verbrennungskammer (71) hat, wobei der Motor (70) dafür eingerichtet ist, die Getriebe-Antriebsscheibe (101a) anzutreiben,
eine Abtriebsscheibe (101b), die an die Getriebe-Antriebsscheibe (101a) gekoppelt ist,
ein Hinterrad (40), das durch die Abtriebsscheibe (101b) gedreht wird,
ein Kühlgebläse (105), das an der Getriebe-Antriebsscheibe (101a) bereitgestellt wird und in einer Fahrzeugbreitenrichtung von der Getriebe-Antriebsscheibe (101a) nach außen angeordnet ist,
einen Getriebedeckel (80), der ausgebildet ist, um die Getriebe-Antriebsscheibe (101a) und das Kühlgebläse (105) abzudecken, wobei der Getriebedeckel (80) eine Ansaugöffnung (81), die in der Fahrzeugbreitenrichtung von dem Kühlgebläse (105) nach außen bereitgestellt wird, und eine Auslassöffnung (83), durch die von der Ansaugöffnung (81) angesaugte Luft ausgelassen wird, einschließt, und **gekennzeichnet durch**
einen Ansaugkanal (90), der in einer Längsrichtung des Fahrzeugs (10) bereitgestellt wird und einen ersten Ansaugkanalabschnitt (91), **durch** den Luft angesaugt wird, und einen zweiten Ansaugkanalabschnitt (92), der mit der Ansaugöffnung (81) verbunden ist, umfasst, wobei
der zweite Ansaugkanalabschnitt (92) einen Abschnitt umfasst, der in der Fahrzeugbreitenrichtung nach innengebogen ist, um mit dem ersten Ansaugkanalabschnitt (91) verbunden zu sein, und
eine in der Fahrzeugbreitenrichtung äußere Seite des ersten Ansaugkanalabschnitts (91) in der Fahrzeugbreitenrichtung von einer Außenseite des Kühlgebläses (105) nach innen angeordnet ist.

2. Fahrzeug (10) nach Anspruch 1, wobei der erste Ansaugkanalabschnitt (91) eine Kanalansaugöffnung (91a) an einem in der Längsrichtung des Fahrzeugs (10) vorderen Ende desselben einschließt und wobei die Kanalansaugöffnung (91a) vor einem in der Längsrichtung des Fahrzeugs (10) vorderen Ende der Verbrennungskammer (71) bereitgestellt wird.

3. Fahrzeug (10) nach Anspruch 1 oder 2, wobei der Ansaugkanal (90) einen gebogenen Abschnitt (91d, 92a) umfasst und eine Innenwand des gebogenen Abschnitts (91d, 92a) im Wesentlichen senkrecht zu einer Richtung der Luft ist, die in dem Ansaugkanal (90) fließt, um zu dem gebogenen Abschnitt (91d, 92a) geleitet zu werden.

4. Fahrzeug (10) nach einem der vorhergehenden Ansprüche, wobei die Auslassöffnung (83) und die Kanalansaugöffnung (91a) oberhalb einer Mitte des Hinterrades (40) bereitgestellt werden.

5. Fahrzeug (10) nach einem der vorhergehenden Ansprüche, das ferner einen Auslasskanal (84) umfasst, der Folgendes umfasst:
die Auslassöffnung (83) an dem einen Ende desselben,
eine Entlüftungsöffnung (82), die am anderen Ende desselben oberhalb der Auslassöffnung (83) angeordnet ist,
eine erste Wasserverdampfungsrippe (84a), eine zweite Wasserverdampfungsrippe (84b), eine erste wasserdichte Rippe (84c) und eine zweite wasserdichte Rippe (84d), wobei die Rippen auf einer inneren Wand des Auslasskanals (84) vorstehen, wobei die erste Wasserverdampfungsrippe (84a) auf der inneren Wand gegenüberliegend der zweiten Wasserverdampfungsrippe (84b) vorhanden ist, und wobei die erste wasserdichte Rippe (84c) unterhalb der zweiten wasserdichten Rippe (84d) vorhanden ist,
wobei, in einem Querschnitt des Auslasskanal (84) von einer Seite, durch die erste Wasserverdampfungsrippe (84a) und die zweite Wasserverdampfungsrippe (84b) verlaufend, längs einer Seite des Getriebedeckels (80) in einer Fahrzeugbreitenrichtung:
ein Ende der ersten wasserdichten Rippe (84c) eine erste Bezugslinie (γ) schneidet, die zwischen einem äußersten Ende der ersten Wasserverdampfungsrippe (84a) in Richtung einer Mitte des Auslasskanals (84) und einem Ende der Auslassöffnung (83) in einer Längsrichtung des Fahrzeuges (10) eine Verbindung herstellt,
ein Ende der zweiten wasserdichten Rippe (84d) eine zweite Bezugslinie (δ) schneidet, die zwischen einem äußersten Ende der zweiten Wasserverdampfungsrippe (84b) in Richtung der Mitte des Auslasskanals (84) und dem anderen Ende der Auslassöffnung (83) in der Längsrichtung des Fahrzeuges (10) eine Verbindung herstellt,
das andere Ende der zweiten wasserdichten Rippe (84d) eine dritte Bezugslinie (ε) schneidet, die zwischen dem äußersten Ende der ersten Wasserverdampfungsrippe (84a) in Richtung der Mitte des Auslasskanals (84) und dem anderen Ende der ersten wasserdichten Rippe (84c) eine Verbindung herstellt, und
sich die erste Bezugslinie (γ) und die zweite Bezugslinie (δ) nicht miteinander schneiden.

## Revendications

1. Véhicule (10) comprenant :
une poulie d'entraînement de transmission (101a) ;
un moteur (70) présentant une chambre de combustion (71), le moteur (70) étant adapté pour entraîner la poulie d'entraînement de transmission (101a) ;
une poulie entraînée (101b) couplée à la poulie d'entraînement (101a) ; et
une roue arrière (40) tournant sous l'effet de la poulie entraînée (101b),
un ventilateur (105) prévu sur la poulie d'entraînement (101a) et disposé à l'extérieur de la poulie d'entraînement (101a) dans le sens de la largeur du véhicule ;
un couvercle de la transmission (80) adapté pour recouvrir la poulie d'entraînement (101a) et le ventilateur (105), le couvercle de la transmission (80) comportant un orifice d'admission (81) disposé à l'extérieur du ventilateur (105) dans le sens de la largeur du véhicule, et un orifice d'échappement (83) à travers lequel s'échappe l'air aspiré par l'orifice d'admission (81) ; et **caractérisé par**
un conduit d'admission (90) prévu dans le sens longitudinal du véhicule (10) et comprenant une première partie de conduit d'admission (91), par laquelle l'air est aspiré, et une deuxième partie de conduit d'admission (92), raccordée à l'orifice d'admission (81), dans lequel
la deuxième partie de conduit d'admission (92) comprend une partie courbée vers l'intérieur, dans le sens de la largeur du véhicule, qui est destinée à être raccordée à la première partie de conduit (91), et
un côté extérieur de la première partie de conduit d'admission (91) dans le sens de la largeur du véhicule est prévu sur l'intérieur d'un côté extérieur du ventilateur (105) dans le sens de la largeur du véhicule.

2. Véhicule (10) selon la revendication 1, dans lequel la première partie de conduit d'admission (91) comporte un orifice d'admission de conduit (91a) au niveau d'une extrémité avant de celle-ci dans le sens longitudinal du véhicule (10), l'orifice d'admission de conduit (91a) étant prévu en avant d'une extrémité avant de la chambre de combustion (71) dans le sens longitudinal du véhicule (10).

3. Véhicule (10) selon la revendication 1 ou 2, dans lequel le conduit d'admission (90) comprend une partie courbée (91d, 92a), une paroi interne de la partie courbée (91d, 92a) étant sensiblement perpendiculaire au sens de l'air qui s'écoule dans le conduit d'admission (90) pour être dirigé vers la partie courbée (91d, 92a).

4. Véhicule (10) selon l'une quelconque des revendications précédentes, dans lequel l'orifice d'échappement (83) et l'orifice d'admission de conduit (91a) sont prévus au-dessus du centre de la roue arrière (40).

5. Véhicule (10) selon l'une quelconque des revendications précédentes, comprenant en outre un conduit d'échappement (84) comprenant :
l'orifice d'échappement (83) au niveau de l'une de ses extrémités ;
l'orifice d'évent (82) agencé au niveau de son autre extrémité, au-dessus de l'orifice d'échappement (83) ;
une première nervure de projection d'eau (84a), une deuxième nervure de projection d'eau (84b), une première nervure étanche à l'eau (84c) et une deuxième nervure étanche à l'eau (84d), ces nervures débordant sur une paroi interne du conduit d'échappement (84), la première nervure de projection d'eau (84a) étant agencée sur la paroi interne en un point opposé à la deuxième nervure de projection d'eau (84b), et la première nervure étanche à l'eau (84c) étant agencée au-dessous de la deuxième nervure étanche à l'eau (84d),
dans lequel, dans une section transversale du conduit d'échappement (84), à partir d'un côté traversant la première nervure de projection d'eau (84a) et la deuxième nervure de projection d'eau (84b), le long d'un côté du couvercle de la transmission (80), dans le sens de la largeur du véhicule :
une extrémité de la première nervure étanche à l'eau (84c) coupe une première ligne de référence (γ), assurant la connexion entre une extrémité de pointe de la première nervure de projection d'eau (84a), en direction du centre du conduit d'échappement (84), et une extrémité de l'orifice d'échappement (83), dans le sens longitudinal du véhicule (10) ;
une extrémité de la deuxième nervure étanche à l'eau (84d) coupe une deuxième ligne de référence (δ) assurant la connexion entre une extrémité de pointe de la deuxième nervure de projection d'eau (84b), en direction du centre du conduit d'échappement (84), et l'autre extrémité de l'orifice d'échappement (83), dans le sens longitudinal du véhicule (10) ;
l'autre extrémité de la deuxième nervure étanche à l'eau (84d) coupe une troisième ligne de référence (ε), assurant la connexion entre l'extrémité de pointe de la première nervure de projection d'eau (84a), en direction du centre du conduit d'échappement (84), et l'autre extrémité de la première nervure étanche à l'eau (84c) ; et
la première ligne de référence (γ) et la deuxième ligne de référence (δ) ne se coupent pas.
